# FASCICULE DE BREVET EUROPEEN

(11) **EP 1 252 045 B1**
(45) Date de publication et mention de la délivrance du brevet: **09.04.2008**
(21) Numéro de dépôt: 01904040.1
(22) Date de dépôt: 02.02.2001
(51) Int. Cl.: B60R 19/24

(54) **DISPOSITIF DE FIXATION DES CROSSES D'UN PARE-CHOCS**
VORRICHTUNG ZUR BEFESTIGUNG DER SEITENSCHENKEL EINER STOSSSTANGE
DEVICE FOR FIXING BUMPER GUARDS

(30) Priorité: 04.02.2000 FR 0001433
(43) Date de publication de la demande: 30.10.2002
(73) Titulaire: COMPAGNIE PLASTIC OMNIUM, 69007 Lyon (FR); RENAULT S.A.S., 92100 Boulogne Billancourt (FR)
(72) Inventeur: DEVILLIERS, Olivier, F-52600 Chalindrey (FR); GINESTET, Thierry, F-78180 Montigny-le-Bretonneux (FR); ROUYER, François, F-75013 Paris (FR)
(74) Mandataire: Remy, Vincent Noel Paul
(86) Numéro de dépôt international: PCT/FR2001/000323
(87) Numéro de publication internationale: WO 2001/056838

(56) Documents cités:
- EP-A- 0 970 854
- WO-A-96/08393
- US-A- 5 061 108
- PATENT ABSTRACTS OF JAPAN vol. 1999, no. 03, 31 mars 1999 (1999-03-31) & JP 10 324204 A (NISSAN MOTOR CO LTD), 8 décembre 1998 (1998-12-08)

## Description

La présente invention concerne un dispositif de fixation des crosses d'un pare-chocs.

On sait que l'esthétique des véhicules modernes exige que les crosses d'un pare-chocs, c'est-à-dire les retours qu'il comporte à ses extrémités et qui s'étendent vers le milieu du véhicule, s'alignent précisément avec les ailes de la carrosserie.

On connaît déjà des systèmes de fixation permettant de positionner précisément les crosses du pare-chocs à affleurement des ailes.

Cependant, ces systèmes connus requièrent une certaine conformation de la partie inférieure des ailes, ou de la partie supérieure du pare-chocs, ce qui se traduit par un surcoût dans leur réalisation.

On connaît par la demande internationale WO 93/08393 un dispositif d'assemblage d'un pare-chocs et d'une aile dans lequel le pare-chocs comporte des pattes élastiques aptes à s'encliqueter dans des ouvertures de l'aile prévues à cet effet.

La présente invention vise à limiter ce surcoût en proposant un dispositif simple et économique de fixation des crosses d'un pare-chocs.

La présente invention a pour objet un dispositif de fixation des crosses d'un pare-chocs à la partie inférieure des ailes d'un véhicule, ledit dispositif comprenant :
- à la partie supérieure des crosses du pare-chocs, un rebord sensiblement horizontal s'étendant vers l'intérieur du véhicule,
- à la partie inférieure de l'aile, un bord rentrant sensiblement horizontal et une portée d'appui située en dessous de ce bord rentrant et ayant pour fonction de supporter le rebord du pare-chocs pour le maintenir à proximité dudit bord rentrant,
- sur le rebord et sur le bord, des formes complémentaires aptes à s'encliqueter pour immobiliser le pare-chocs dans la position souhaitée par rapport à l'aile,
caractérisé par le fait que la portée d'appui est constituée par une succession d'appuis discrets répartis le long du bord, les formes complémentaires étant localisées en dehors de ces appuis discrets, le rebord du pare-chocs étant apte à se déformer de façon élastique entre deux appuis discrets pour permettre, du seul fait de sa déformation, l'encliquetage des formes complémentaires.

Dans la présente description, on entend par appuis discrets des appuis constitués d'éléments séparés formant une portée d'appui discontinue.

On comprend que le dispositif de fixation selon l'invention permet de réaliser une aile de carrosserie et une crosse de pare-chocs dans lesquelles les moyens de fixation n'ont pas à comporter de pièce élastiquement déformable, du fait que les déformations du rebord du pare-chocs suffisent pour créer le débattement nécessaire à l'encliquetage des formes complémentaires.

Il en résulte que le pare-chocs et l'aile peuvent être obtenus par moulage de matière plastique dans des moules d'injection relativement simples.

En outre, l'aile et le pare-chocs ainsi obtenus peuvent se suffire à eux-mêmes sans qu'aucune pièce complémentaire ne soit nécessaire.

La déformation du pare-chocs est continue entre les portées d'appui.

Dans un mode de réalisation particulier de l'invention, les appuis discrets sont constitués par des nervures verticales en saillie d'une portion de paroi prolongeant vers le bas le bord rentrant de l'aile.

Ces nervures verticales présentent avantageusement la forme de triangles, dont un côté fait face au bord rentrant de l'aile.

Dans un mode de réalisation particulier de l'invention, les formes complémentaires sont constituées par des fenêtres découpées dans le rebord du pare-chocs et des bossages en saillie du bord rentrant de l'aile.

Pour l'encliquetage, le rebord du pare-chocs se déforme entre les appuis de l'aile, en se cintrant par portions, de façon à ce que le milieu du rebord du pare-chocs, où se trouve de préférence la fenêtre, s'écarte du bord rentrant de l'aile, d'une distance au moins égale à la hauteur des bossages dudit bord rentrant.

Ainsi, les bossages peuvent venir en regard des fenêtres et y pénétrer lorsque le pare-chocs reprend sa forme initiale par retour élastique, forme initiale dans laquelle son rebord est plan.

Dans un mode de réalisation particulier de l'invention, les formes complémentaires d'encliquetage comportent des chanfreins qui provoquent la déformation du rebord du pare-chocs lorsque ce dernier est engagé en force sous le bord rentrant de l'aile.

La mise en place du pare-chocs est alors particulièrement simple : il suffit de présenter le pare-chocs devant le véhicule, d'enfoncer son rebord en force sous le bord rentrant de l'aile suivant une direction orientée vers l'intérieur du véhicule et d'attendre que l'encliquetage des formes complémentaires immobilise les crosses du pare-chocs dans l'alignement des ailes du véhicule.

Les chanfreins des formes complémentaires d'encliquetage peuvent également leur permettre de se désencliqueter en cas de choc subi par le pare-chocs.

Ainsi, le pare-chocs peut se désolidariser de l'aile et le préserver de tout risque de détérioration résultant du choc.

Dans un autre mode de réalisation, un jeu de montage est prévu entre les formes complémentaires d'encliquetage du pare-chocs et de l'aile, à l'avant et à l'arrière desdites formes, selon la direction longitudinale du véhicule.

Dans ce cas, l'une des formes d'encliquetage comporte une butée franche à l'arrière, assurant le positionnement longitudinal du pare-chocs par rapport à l'aile, tandis qu'à l'avant, selon la direction longitudinale du véhicule, elle comporte un chanfrein dimensionné pour exercer une force longitudinale sur le pare-chocs assurant l'appui sur la butée franche.

Dans le but de mieux faire comprendre l'invention, on va en décrire maintenant un mode de réalisation donné à titre d'exemple non limitatif de la portée de l'invention, en référence au dessin annexé dans lequel :
- la figure 1 est une vue en perspective de la partie supérieure de la crosse gauche d'un pare-chocs avant et de la partie inférieure de l'aile avant gauche d'un véhicule,
- la figure 2 est une section selon le trait de coupe II de la figure 1, après mise en place du pare-chocs,
- la figure 3 est une section selon III-III de la figure 1,
- la figure 4 est une section selon IV-IV de la figure 1,
- la figure 5 est une section selon V-V de la figure 1,
- la figure 6 est une section analogue à la figure 3 montrant une variante de partie inférieure d'aile.

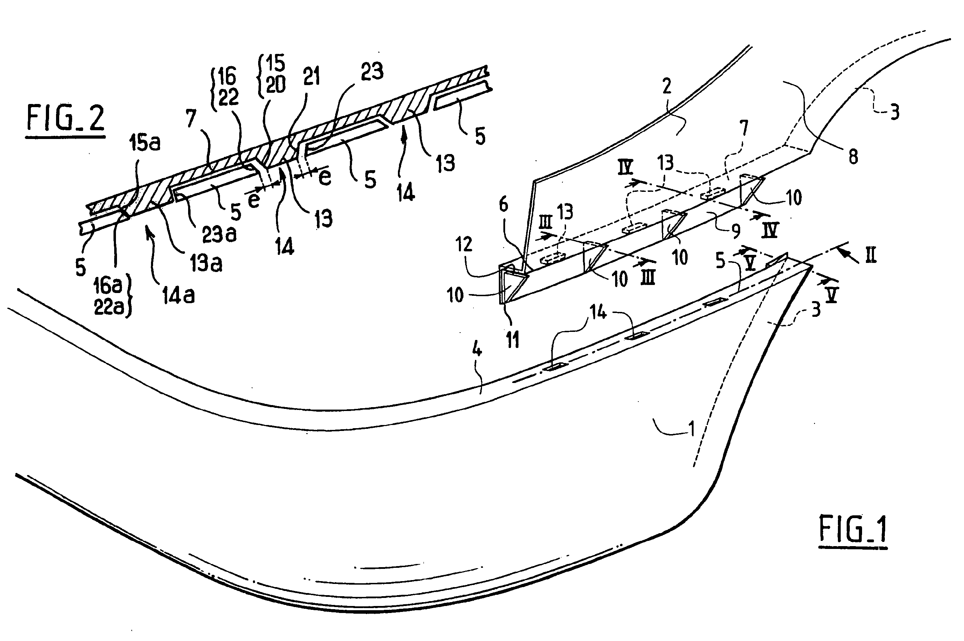

Sur la figure 1, on a représenté la partie supérieure de la crosse gauche 1 d'un pare-chocs et la partie inférieure de l'aile avant gauche 2 d'un véhicule.

La crosse 1 se termine, en direction de l'arrière du véhicule, par un arrondi qui correspond au passage de roue 3.

L'arête supérieure 4 du pare-chocs comporte un rebord plan 5, sensiblement horizontal en position normale du pare-chocs et du véhicule, qui s'étend vers l'intérieur du véhicule sur une largeur de quelques centimètres, par exemple 5 cm.

L'arête inférieure 6 de l'aile comporte, en avant du passage de roue 3, un bord rentrant 7 sensiblement horizontal en position normale du véhicule. Ce bord rentrant 7 peut être considéré comme perpendiculaire à la face extérieure visible 8 de l'aile. Il s'étend vers l'intérieur du véhicule sur une largeur légèrement supérieure à celle du rebord 5 du pare-chocs.

Le bord rentrant 7 se prolonge vers le bas par une portion de paroi 9 sensiblement parallèle à la face extérieure visible 8 de l'aile.

Cette portion de paroi comporte des nervures verticales 10 en forme de triangles régulièrement réparties tout au long du bord rentrant.

Chaque nervure triangulaire 10 a un sommet 11 dirigé vers le bas et un côté 12, opposé à ce sommet, parallèle au bord rentrant 7 de l'aile.

Les côtés 12 des nervures triangulaires 10 constituent autant d'appuis discrets.

Entre le côté 12 de chaque nervure triangulaire 10 et le bord rentrant 7, il subsiste un espace qui est très légèrement supérieur à l'épaisseur du rebord 5 du pare-chocs.

Le bord rentrant 7 comporte des bossages 13 rectangulaires en saillie vers le bas, dont chacun est situé entre deux nervures 10, sensiblement à égale distance de chacune d'elles.

Le rebord 5 du pare-chocs est muni de fenêtres 14, ou perçages, rectangulaires, régulièrement répartis tout au long dudit rebord, avec un espacement entre deux fenêtres correspondant à l'espacement entre deux nervures 10 de l'aile, qui est aussi l'espacement entre deux bossages. Chaque fenêtre 14 est dimensionnée de manière à pouvoir accueillir un bossage 13 de l'aile.

Un jeu de montage e est ménagé entre, d'une part, les bords avant 20 et arrière 21 de chaque bossage, d'autre part, les extrémités avant 22 et arrière 23 de chaque fenêtre, sauf en ce qui concerne le bossage 13a et la fenêtre 14a situés le plus en avant du véhicule.

En effet, le bossage 13a est dimensionné pour occuper toute la fenêtre 14a, laquelle est délimitée, à son extrémité arrière, par une butée franche 23a, sensiblement perpendiculaire à l'axe longitudinal du véhicule et, à son extrémité avant 22a, par un biseau 16a dont la pente est orientée de manière que le bossage 13a muni d'un chanfrein 15a, soit repoussé contre la butée franche 23a.

Le bossage 13a est donc très légèrement plus long que la fenêtre 14a, afin d'assurer son serrage dans la fenêtre.

Les fenêtres 14 sont positionnées sur le pare-chocs de manière à pouvoir venir en regard des bossages 13 de l'aile lorsque le pare-chocs est convenablement positionné par rapport à l'aile.

Comme on le voit sur la vue en coupe de la figure 2, chaque bossage comporte un chanfrein 15 sur son bord avant 20 dirigé vers l'avant du véhicule.

Ce chanfrein 15 peut en outre être remplacé ou complété, par une découpe en biseau 16 de l'extrémité avant 22 de la fenêtre, dans l'épaisseur du rebord du pare-chocs.

Ces chanfreins et biseaux permettent au pare-chocs de se désolidariser de l'aile en cas de choc, notamment frontal.

En effet, dans ce cas, le pare-chocs se trouve sensiblement repoussé vers l'arrière du véhicule et les chanfreins glissent sur les extrémités biseautées des fenêtres.

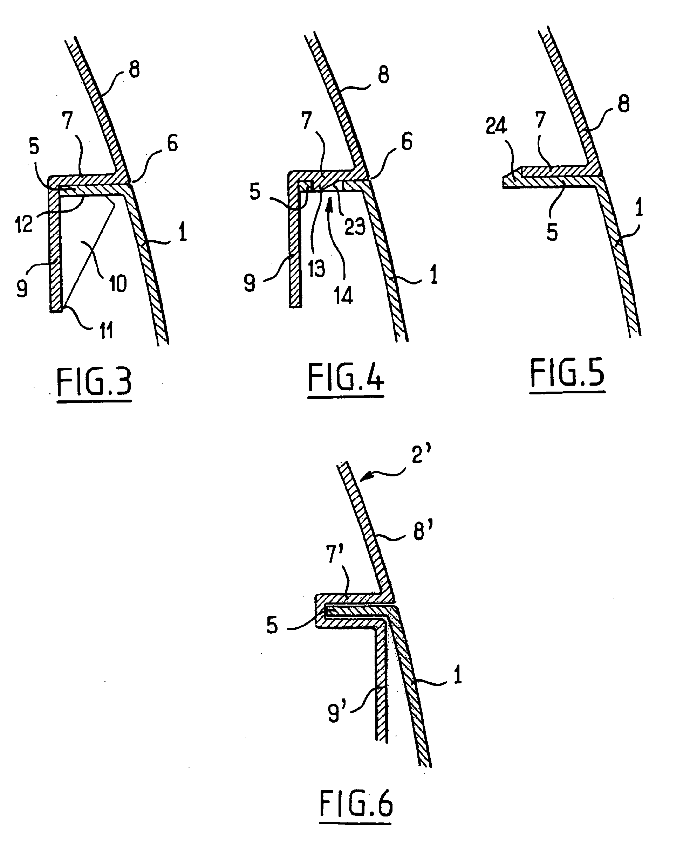

Un autre chanfrein 23 est également prévu sur chaque bossage, sur son bord dirigé vers l'extérieur du véhicule, comme on le voit à la figure 4.

Les chanfreins 23 ont pour objet de faciliter la mise en place du pare-chocs sur l'aile.

En effet, en présentant le pare-chocs sensiblement dans sa position finale et en introduisant son rebord 5 sous le bord rentrant 7 de l'aile transversalement par rapport au véhicule, on provoque, grâce aux chanfreins 23, la déformation du rebord du pare-chocs, lequel se cintre entre deux nervures verticales triangulaires 10, de manière à passer sous les bossages 13 jusqu'à ce que ces bossages pénètrent dans les fenêtres 14.

Une fois cette opération effectuée, la mise en place du pare-chocs est terminée. Il ne reste plus qu'à éventuellement verrouiller le pare-chocs en position, par exemple à l'aide d'une vis (non représentée) traversant le rebord du pare-chocs et le bord rentrant de l'aile.

A l'extrémité arrière de chaque crosse, une butée 24 assure la mise en référence du pare-chocs par rapport à l'aile, comme représenté à la figure 5.

Dans l'exemple décrit, l'aile et le pare-chocs sont dépourvus de pattes élastiquement déformables dans leurs régions d'assemblage, l'aile et le pare-chocs se déformant de manière continue lors de l'assemblage.

Sur la section de la figure 6, on a représenté une variante du bord inférieur de l'aile 2', qui comporte une portion de paroi 9' continue en remplacement de chaque nervure verticale en forme de triangle.

Cette portion de paroi 9' suit les contours du rebord plan 5 du pare-chocs. Elle ne s'étend longitudinalement que sur une petite distance, afin de permettre le cintrage dudit rebord plan 5 entre deux portions de paroi lors de la mise en place du pare-chocs sur l'aile.

Il est bien entendu que le mode de réalisation qui vient d'être décrit ne présente aucun caractère limitatif et qu'il pourra recevoir toutes modifications désirables sans sortir pour cela du cadre de l'invention telle que revendiquée.

## Revendications

1. Dispositif de fixation des crosses d'un pare-chocs à la partie inférieure des ailes d'un véhicule, ledit dispositif comprenant :
- à la partie supérieure des crosses (1) du pare-chocs, un rebord (5) sensiblement horizontal s'étendant vers l'intérieur du véhicule, le pare-chocs étant dépourvu de pattes élastiquement déformables sur le rebord,
- à la partie inférieure de l'aile (2, 2'), un bord rentrant (7, 7') sensiblement horizontal et une portée d'appui située en dessous de ce bord rentrant et ayant pour fonction de supporter le rebord (5) du pare-chocs pour le maintenir à proximité dudit bord rentrant,
- sur le rebord et sur le bord, des formes complémentaires (13, 14) aptes à s'encliqueter pour immobiliser le pare-chocs dans la position souhaitée par rapport à l'aile,
la portée d'appui étant constituée par une succession d'appuis discrets (12) répartis le long du bord, les formes complémentaires (13, 14) étant localisées en dehors de ces appuis discrets, le rebord du pare-chocs étant apte à se déformer de .. façon élastique et continue entre deux appuis discrets pour permettre, du seul fait de sa déformation, l'encliquetage des formes complémentaires.

2. Dispositif selon la revendication 1, **caractérisé par le fait que** les appuis discrets sont constitués par des nervures verticales (10) en saillie d'une portion de paroi (9) prolongeant vers le bas le bord rentrant (7) de l'aile.

3. Dispositif selon la revendication 2, **caractérisé par le fait que** les nervures verticales (10) présentent la forme de triangles, dont un côté (12) fait face au bord rentrant de l'aile.

4. Dispositif selon l'une quelconque des revendications 1 à 3, **caractérisé par le fait que** les formes complémentaires sont constituées par des fenêtres (14) découpées dans le rebord (5) du pare-chocs et des bossages (13) en saillie du bord rentrant de l'aile.

5. Dispositif selon l'une quelconque des revendications 1 à 4, **caractérisé par le fait que** les formes complémentaires comportent des chanfreins (23) qui provoquent la déformation du rebord du pare-chocs lorsque ce dernier est engagé en force sous lé bord rentrant de l'aile.

6. Dispositif selon l'une quelconque des revendications 1 à 5, **caractérisé par le fait que** les formes complémentaires d'encliquetage ménagent entre elles un jeu de montage (e) et que l'une des formes complémentaires comporte une butée franche (23a) à l'arrière, assurant le positionnement longitudinal du pare-chocs par rapport à l'ailé, tandis qu'à l'avant elle comporte un chanfrein (15a; 16a) dimensionné pour exercer sur le pare-chocs une force longitudinale assurant l'appui sur la butée franche (23a).

## Claims

1. A device for fastening bumper overriders to the bottom portions of the fenders of a vehicle, said device comprising:
at top portions of the bumper overriders (1), a substantially horizontal rim (5) extending towards the inside of the vehicle, the bumper not having any resiliently deformable tabs on the rim;
at bottom portions of the fenders (2, 2'), a substantially horizontal reentrant edge (7, 7') and a bearing surface situated beneath said reentrant edge and serving to support the rim (5) of the bumper in order to keep it in the proximity of said reentrant edge; and
on the rim and on the edge, complementary shapes (13, 14) suitable for snap-fastening to hold the bumper stationary in the desired position relative to the fender;
the bearing surface being constituted by a succession of discrete lands (12) distributed along the edge, the complementary shapes (13, 14) being located away from said discrete lands, the rim of the bumper being suitable for deforming elastically and continuously between two discrete lands to make it possible, merely by deforming, for the complementary shapes to snap-fasten.

2. A device according to claim 1, **characterized by** the fact that the discrete lands are constituted by vertical ribs (10) projecting from a wall portion (9) extending the reentrant edge (7) of the fender downwards.

3. A device according to claim 2, **characterized by** the fact that the vertical ribs (10) are triangular in shape with one side (12) facing the reentrant edge of the fender.

4. A device according to any one of claims 1 to 3, **characterized by** the fact that the complementary shapes are constituted by windows (14) cut out in the rim (5) of the bumper and projections (13) projecting from the reentrant edge of the fender.

5. A device according to any one of claims 1 to 4, **characterized by** the fact that the complementary shapes include chamfers (23) causing the rim of the bumper to deform when it is engaged by force under the reentrant edge of the fender.

6. A device according to any one of claims 1 to 5, **characterized by** the fact that the complementary snap-fastening shapes leave between them assembly clearance (e) and that one of the complementary shapes includes an abrupt abutment (23a) at the rear, ensuring longitudinal positioning of the bumper relative to the fender, while at the front it includes a chamfer (15a; 16a) dimensioned to exert a longitudinal force on the bumper, causing it to bear against the abrupt abutment (23a).

## Patentansprüche

1. Vorrichtung zur Befestigung der Seitenschenkel einer Stoßstange am unteren Teil der Kotflügel eines Fahrzeugs, wobei die Vorrichtung Folgendes umfasst:
- am oberen Teil der Seitenschenkel (1) der Stoßstange einen Rand (5), der sich in etwa horizontal zum Inneren des Fahrzeugs erstreckt, wobei die Stoßstange keine elastisch verformbaren Laschen auf dem Rand aufweist,
- am unteren Teil des Kotflügels (2, 2') eine in etwa horizontale versenkte Kante (7, 7') und einen unterhalb dieser versenkten Kante angeordneten Auflagebereich, der die Funktion hat, den Rand (5) der Stoßstange abzustützen, um diesen in Nähe der versenkten Kante zu halten,
- auf dem Rand und der Kante komplementäre Formen (13, 14), so gestaltet, dass diese einrasten können, um die Stoßstange in der gewünschten Position zum Kotflügel zu arretieren,
wobei der Auflagebereich aus einer Abfolge von einzelnen Auflagen (12), verteilt entlang der Kante, besteht, die komplementären Formen (13, 14) außerhalb dieser einzelnen Auflagen angeordnet sind, und der Rand der Stoßstange so gestaltet ist, dass er sich auf elastische und kontinuierliche Weise zwischen zwei einzelnen Auflagen verformt, um allein durch die Verformung das Einrasten der komplementären Formen zu ermöglichen.

2. Vorrichtung nach Anspruch 1, **dadurch gekennzeichnet, dass** die einzelnen Auflagen aus vertikalen Rippen (10) bestehen, die an einem Teil der Wand (9) hervortreten, in Verlängerung der versenkten Kante (7) des Kotflügels nach unten.

3. Vorrichtung nach Anspruch 2, **dadurch gekennzeichnet, dass** die vertikalen Rippen (10) die Form von Dreiecken aufweisen, von denen eine Seite (12) zur versenkten Kante des Kotflügels zeigt.

4. Vorrichtung nach einem der Ansprüche 1 bis 3, **dadurch gekennzeichnet, dass** die komplementären Formen aus Aussparungen (14), die in den Rand (5) der Stoßstange geschnitten sind, und Vorsprüngen (13), die an der versenkten Kante des Kotflügels hervortreten, bestehen.

5. Vorrichtung nach einem der Ansprüche 1 bis 4, **dadurch gekennzeichnet, dass** die komplementären Formen Fasen (23) umfassen, die das Verformen des Randes der Stoßstange hervorrufen, wenn letztere unter Krafteinwirkung unter die versenkte Kante des Kotflügels eingesetzt wird.

6. Vorrichtung nach einem der Ansprüche 1 bis 5, **dadurch gekennzeichnet, dass** die komplementären Einrastformen untereinander ein Montagespiel (e) aufweisen und dass eine der komplementären Formen hinten einen Anschlag (23a) umfasst, der die längliche Positionierung der Stoßstange zum Kotflügel gewährleistet, während dieser vorne eine entsprechend dimensionierte Fase (15a, 16a) aufweist, um auf die Stoßstange eine Längskraft auszuüben, welche die Auflage auf dem Anschlag (23a) gewährleistet.
